# EUROPEAN PATENT SPECIFICATION

(11) **EP 2 069 887 B1**
(45) Date of publication and mention of the grant of the patent: **07.11.2012**
(21) Application number: 07841939.7
(22) Date of filing: 06.09.2007
(51) Int. Cl.: G06F 3/01

(54) **LOCALIZED HAPTIC FEEDBACK**
LOKALISIERTES HAPTISCHES FEEDBACK
RETOUR HAPTIQUE LOCALISÉ

(30) Priority: 14.09.2006 US 531867
(43) Date of publication of application: 17.06.2009
(60) Divisional application: 11191718.3
(73) Proprietor: Immersion Corporation, San Jose, CA 95131 (US)
(72) Inventor: OLIEN, Neil Thomas, Montreal, Quebec H4B 2V3 (CA); GRANT, Danny A., Montreal, Quebec H2S 2C8 (CA); GOMEZ, Daniel H., Newton, MA 02459 (US)
(74) Representative: Hofstetter, Schurack & Partner
(86) International application number: PCT/US2007/077704
(87) International publication number: WO 2008/033710

(56) References cited:
- US-A- 5 887 995

## Description

### FIELD OF THE INVENTION

One embodiment of the present invention is directed to haptic feedback. More particularly, one embodiment of the present invention is directed to localizing haptic feedback to a specific region.

### BACKGROUND INFORMATION

Humans interface with electronic and mechanical devices in a variety of applications, and the need for a more natural, easy-to-use, and informative interface is a constant concern. In an automotive environment, the predominate interface is still a mechanical button or dial. One reason for the popularity of this kind of interface is that the driver of an automobile typically must engage a button or dial while maintaining a view of the road. Mechanical devices allow the driver to feel a mechanical button or dial.

However, having mechanical buttons and dials introduces several disadvantages. For one, any type of mechanical interface is subject to wear and degradation. Second, buttons and dials on an automobile dashboard include cracks and crevices that build up dirt and become unsightly and unsanitary. Finally, many automobile manufacturers attempt to create a dashboard having a futuristic sleek look, and mechanical buttons can detract from this appearance.

It is known to use force feedback or tactile feedback (collectively referred to herein as "haptic feedback") in combination with a touchpad or touch control "buttons" in order to eliminate mechanical buttons. However, known haptic feedback devices tend not to isolate the feedback (i.e., vibration) within the boundaries of a specific "button". In many environments, this might not be a large problem. However, in an automobile environment and other environments where a user is not looking at the button when it is being "pressed", it is more important to isolate the haptic feedback to only the targeted region.
US 5 887 995 A discloses a touchpad with one or more overlays providing a computer system with various input control functions. The overlay preferably includes tactile response elements to provide tactile feedback to the operator as an indication that a portion of the overlay has been pressed. The touchpad includes a capacitive sensor. Electronics coupled to the touchpad determine which portion of the touchpad sensor surface area has been touched or pressed. The amount of tactile feedback to the computer operator can be varied through the design and construction of the overlay and the overlay may be provided with no tactile feedback, if desired. As such, numerous overlays can be placed on the touchpad of the computer system, thereby providing the computer system with multiple different input control functions. The computer operator may manually input the type of overlay being used into the computer. Alternatively, a portion of the touchpad surface area maybe dedicated to encoding overlay identification information using any one of a variety of techniques. Thus, the computer system may automatically detect the type of overlay used.
US 2006/0046031 A1 discloses a control panel for a device with a graphical user interface (GUI) which displays several control icons that represent various control functions for the device. The control icons on the GUI have tactile detectability which is provided by either vibrotactile display, electrotactile display, or a combination of the two.
DE 199 62 552 A1 discloses a touch screen having multiple individual screen surface elements, at least a part of which are grouped into one or more touch operating elements. At least one of the surface elements is movably arranged in a positioning direction. A controllable actuator is provided for controllably moving the respective movable screen surface element. The actuator may comprise memory metal strips.
Based on the foregoing, there is a need for a system and method in which haptic feedback is applied to a touch control so that the feedback is isolated to a targeted region.

### SUMMARY OF THE INVENTION

One embodiment of the present invention is a surface that generates a haptic feedback. The surface includes a first region having a first level of stiffness and a second region having a second level of stiffness that is less than the first level of stiffness. The second region defines a deformation region within which the haptic feedback is generally localized.

### BRIEF DESCRIPTION OF THE DRAWINGS

Fig. 1 is a plan view of the front side of an automotive dashboard.

Fig. 2 is a cross-sectional view of the rear side of a surface and an actuator.

Fig. 3 is a plan view of a portion of the rear side of the surface.

Fig. 4 is a plan view of a portion of the rear side of the surface.

### DETAILED DESCRIPTION

One embodiment is a surface having a reduced stiffness region and an actuator coupled to the region. The actuator creates an isolated haptic feedback effect within the reduced stiffness region.

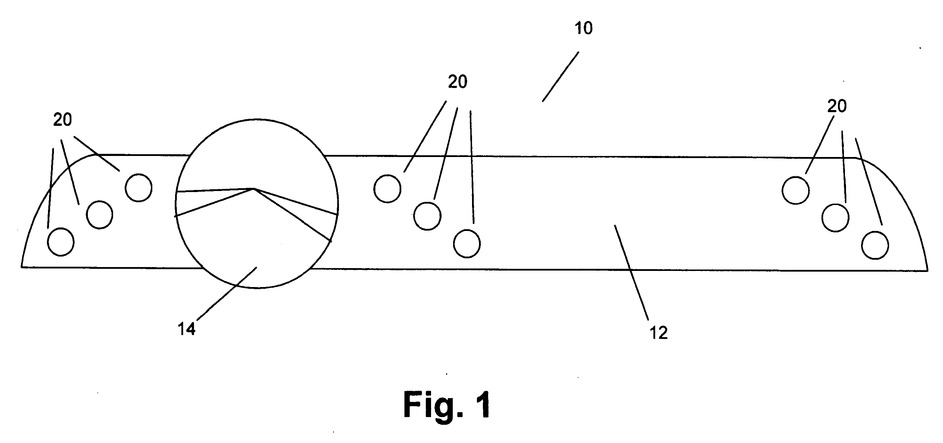

Fig. 1 is a plan view of the front side of an automotive dashboard 10 In accordance with one embodiment of the present invention.
Dashboard 10 is formed from a contiguous surface or panel 12. A plurality of buttons 20 are formed on surface 12. A steering wheel 14 is coupled to dashboard 10. Other components typically present on a dashboard, such as gauges, dials, etc., are not shown in Fig. 1.

Each button 20 in one embodiment is represented on the front side of dashboard 10 as a graphical icon or other indication of the geographic location of the button. Otherwise, surface 12 in the areas of buttons 20 is contiguous and smooth on the front side, and includes no cracks or crevices that can be unsightly and retain dirt.

In one embodiment, surface 12 is formed from a layer of wood laminated to a layer of metal. The wood layer is on the front side of surface 12. In other embodiments, surface 12 can be formed of other materials such as, for example, glass, plastic, composite materials such as carbon fiber, and stone. In one embodiment, in each area substantially behind the location of each button 20, a portion of the metal and wood layers from the rear side of surface 12 is removed to create a thinner region having a lower level of stiffness than the regions of surface 12 that are not altered or thinned.

In general, "stiffness" disclosed herein, i.e., flexural or bending stiffness, relates to the amount of deflection of a material resulting from an applied normal force. This is a function of cross-section (thickness), location of the applied force, and a material property of the material used. When defining stiffness, the concept of Young's modulus and moment is typically applied, i.e., where deflection = EI = flexural modulus of elasticity (force x length²) x moment of inertia (length⁴). However, typical calculations for EI use "Timoshenko" equations which assume constant cross section, rigid supports at the ends and homogenous materials. In embodiments of the present invention, stiffness is the result of a cross-section that is varied so as to direct forces toward a location, such as where a button and actuator(s) are positioned. In one embodiment, more than one material is used, such as in a laminate or other form of composite. For instance, with the laminate, the cross section of one or more of the materials can be varied or different materials, having a different modulus may be used in the deformable region which may or may not change the total cross section, and yet both can contribute to a designed stiffness. In one embodiment, features such as rings or other local features can contribute to a chosen stiffness response to a user. In this manner, an effective or resulting stiffness can be tailored by design. Therefore, values for a stiffness resulting from a force applied at a given location may have to be determined either empirically or through finite element analysis. The embodiments disclosed are but a few ways to tailor stiffness and are not meant to be limiting or exhaustive in the methods available.

The region having a lower level of stiffness forms a deformable region, which generally coincides with the shape and location of button 20. An actuator is coupled to the deformable region to create a haptic effect that is substantially isolated and concentrated within the deformable region. Therefore, the deformable region is the approximate region that moves through contact with the actuator.

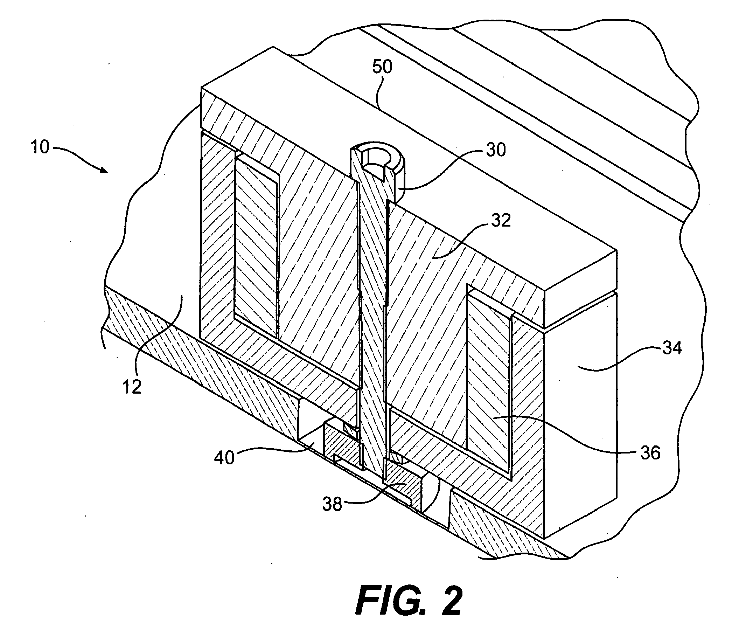

Fig. 2 is a cross-sectional view of the rear side of surface 12 and an actuator 50 in accordance with one embodiment of the present invention. Surface 12 includes a deformable region 40 which is formed by a removal of material from the rear side of surface 12. In one embodiment, surface 12 in regions that have not had material removed has a thickness of approximately 4.5 mm, and deformable region 40 has a thickness of approximately 1.5 mm.

Actuator 50 is coupled to the back side of surface 12 in an area other than deformable region 40. Actuator 50 includes a stationary electromagnet 34, a floating electromagnet 32, and a copper coil 36. A shaft 30 is attached to a plunger 38 and is embedded within floating electromagnetic 32.

In a no-power condition, plunger 38 rests or is fixed against the back (non-visible side) of deformable region 40. If plunger 38 is not fastened to the surface, a low spring force presses plunger 38 against the surface to prevent it from rattling during normal environmental conditions, such as driving a car over bump. When power is supplied to copper coil 36, electromagnets 32 and 34 are attracted to each other, creating substantial force. This force acts against a return spring (not shown) and pushes plunger 38 (if not attached to the surface) or pulls plunger 38 (if attached to the surface) to move the surface at deformable region 40, thereby deforming the surface to create a vibration or haptic effect. In one embodiment, the surface itself may function as the return spring.

Although actuator 50 is an electromagnetic type of actuator, any type of actuator can be used that can apply a haptic effect or force to surface 12 at deformable region 40. For example actuator 50 may be a "smart material" such as piezoelectric, electro-active polymers or shape memory alloys. Although actuator 50 is coupled to surface 12 both inside and outside region 40 in Fig. 2, in another embodiment actuator 50 may only be coupled to region 40. In this embodiments, actuator 50 may be an Eccentric Rotating Mass ("ERM") in which an eccentric mass is moved by a motor, or a Linear Resonant Actuator ("LRA") in which a mass attached to a spring is driven back and forth. In another embodiment, actuator 50 may be coupled to surface 12 inside region 40 and coupled to a separate grounded element, such as a frame or structural member. Further, a controller and other necessary components are coupled to actuator 50 in order to create the signals and power to actuator 50 to create the haptic effects.

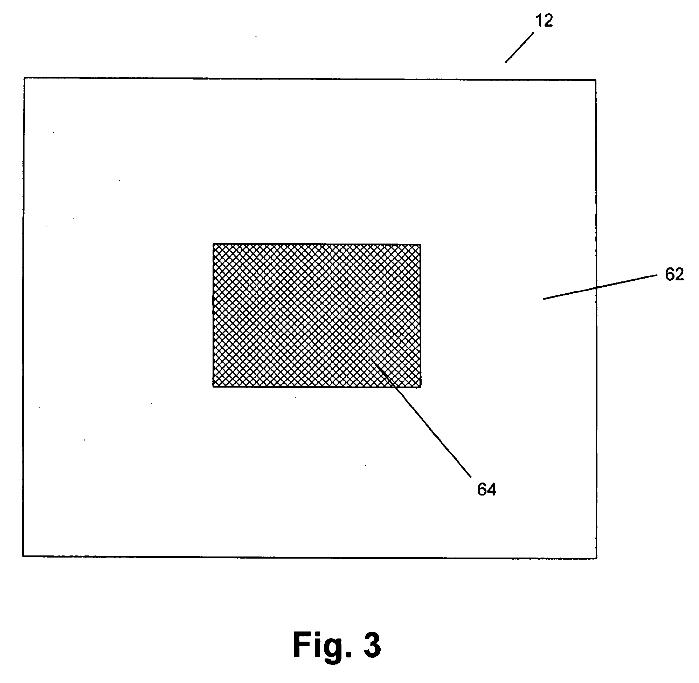

Fig. 3 is a plan view of a portion of the rear side of surface 12. Region 64 is the region where material from surface 12 was removed to create a reduced stiffness region. The remainder of the portion of surface 12 shown in Fig. 3. region 62, has not had any material removed. In the embodiment shown in Fig. 3, region 64 approximately coincides with a deformable region of surface 12, and haptic effects that are applied by an actuator coupled to region 64 will be substantially isolated within region 64.

In another embodiment, region 64 has a tapered surface thickness forming a graduated reduced stiffness region rather than a constant surface thickness. The tapering can be formed by removing more material from the center of region 64 than from the edges in a generalized "V" shape. This creates a haptic effect that gets stronger at the center of region 64 and will produce the benefit of directing a user's finger which is on the edge of region 64 to the center of region 64. Thus, for example, a driver in an automobile can have their finger directed to a button through haptic feedback without having to look at the button.

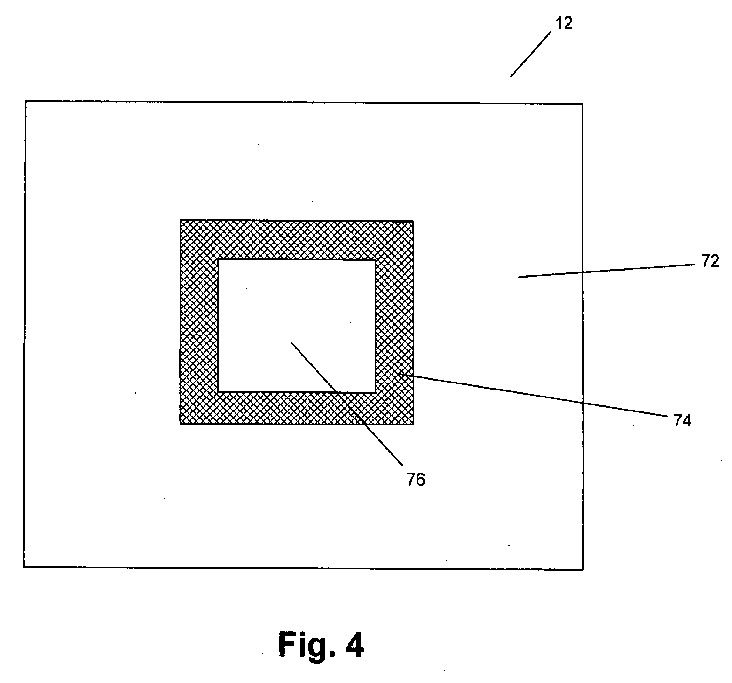

Fig. 4 is a plan view of a portion of the rear side of surface 12. Region 74 is the region where material from surface 12 was removed to create a reduced stiffness region. The remainder of the portion of surface 12 shown in Fig. 4, regions 72 and 76, have not had any material removed. In the embodiment shown in Fig. 4, the deformable region of surface 12 is approximately surrounding reduced thickness region 74 in combination with region 76. Thus, a portion of surface 12, region 76, is part of the deformable region even though it has not had material removed to form a reduced stiffness region. In the embodiment of Fig. 4, haptic effects that are applied by an actuator coupled to region 76 will be substantially isolated within regions 74 and 76.

In one embodiment, the appearance and state of each of the buttons 20 of Fig. 1 on the front side of surface 12 is enhanced by the addition of an electroluminescent luminescent layer and light emitting diodes ("LED's") applied on the rear side of surface 12 at the location of buttons 20. The luminescent layer creates illumination allowing the icons for the buttons to be visible at night giving the appearance of back lighting. When a button 20 is pressed, to provide further feedback to the user, LEDs may be turned on or off to indicate the state of a device controlled by a button, for example the level of heat for a heated seat.

Although embodiments disclosed above are of an automotive dashboard, the present invention can be implemented on a surface of any other type of device where isolated haptic effects are desired. Other embodiments can include aircraft buttons, buttons on appliances such as refrigerators, and buttons on medical devices where cleanliness concerns dictate having a smooth button surface. In another embodiment, rather than having an icon or other indicator of the presence of the button, the button is unmarked. This embodiment is useful for creating a hidden wall switch where the button is undetectable except when it is pressed and the isolated haptic effect is generated. In addition, features other than buttons can be designed with these localized haptics effects. Such other features can be, for example, a haptically enabled surface representing a linear slider, a curved slider or a circular slider. The slider would allow a user to move a finger along the haptic enabled surface such as to select from a table or to set a volume level.

As described, embodiments of the present invention create an isolated haptic effect which creates many advantages. Because the haptic effect is isolated, it is stronger and thus can be more easily felt through, for example, a driving glove. Further, multiple buttons 20 of Fig. 1 can be pressed at the same time without having the haptic effect from one button bleeding over to the other button, and each button can be separately discernable by the user. Embodiments of the present invention allow much greater design freedom of switch placement and increased aesthetics along with needed user haptic feedback. Further, embodiments of the present invention allow context to be included in the button press because the button does not always have to feel the same due to different available haptic effects. For example, if the button functionality was not permitted at the time of an attempted press, an error buzz effect could be played instead of a standard haptic effect. Further, the Isolation of the haptic effect reduces power requirements by localizing the action to a small region, and reduces potential acoustic noise generation.

Although in embodiments disclosed above the reduced thickness region is created by removal of material from the rear side of the surface, other methods can be used to create a reduced thickness region. For example, instead of removal of material, material can be added to the surface in regions other than the reduced thickness region. In another embodiment, surface 12 can be formed from non-uniform materials. For example, a softer plastic region can be molded into a harder plastic base.

Several embodiments of the present invention are specifically illustrated and/or described herein.

## Claims

1. A system for providing feedback to a user input, said system comprising a haptic enabled location on a contiguous surface (12) that generates a haptic feedback, said surface (12) comprising:
a first region (62, 72) having a first level of stiffness; and
a second region (40, 64, 74) having a second level of stiffness that is less than said first level of stiffness;
wherein said second region (40, 64, 74) defines a deformation region (40), and wherein an actuator (50) generates the haptic feedback that is generally localized within said deformation region (40);
wherein the actuator (50) comprises a plunger (38) that contacts the deformation region (40) when power is not applied to the actuator (50);
wherein power is applied to the actuator (50) when the haptic enabled location is pressed and a force is applied by said actuator (50) to a return spring that moves the plunger (38); and
wherein the movement of the plunger (38) moves the surface at the deformation region (40), thereby deforming the surface (12) to create the haptic effect.

2. The system of claim 1, wherein said deformation region (40) is substantially the same region as said second region (40, 64, 74) or wherein said deformation region (40) is generally surrounded by said second region (74).

3. The system of claim 1, wherein said first region (62, 72) has a first thickness and said second region (40, 64, 74) has a second thickness that is thinner than said first thickness.

4. The system of claim 3, wherein said second thickness is tapered.

5. The system of claim 1, wherein the haptic feedback comprises a vibration of the deformation region (40).

6. The system of claim 1, wherein said actuator (50) comprises a plunger (38) coupled to an electromagnet (32, 34).

7. The system of claim 1, wherein said actuator (50) comprises a smart material.

8. A method of providing feedback for a haptic enabled location on a contiguous surface (12) having a front side and a rear side, said method comprising:
defining a deformation region (40) on the surface (12) via an intersection of a first region (62, 72) having a first level of stiffness and a second region (40, 64, 74) having a second level of stiffness that is less than said first level of stiffness, wherein said second region (40, 64, 74) defines the deformation region (40); and
receiving an indication that the haptic enabled location is pressed; **characterized in**
generating a haptic effect on the deformation region (40) via an actuator (50) coupled to the back side of said surface (12) in an area other than said deformation region (40) when the haptic enabled location is pressed;
wherein the actuator (50) comprises a plunger (38) that contacts the deformation region (40) on the rear side when power is not applied to the actuator (50);
wherein power is applied to the actuator (50) when the haptic enabled location is pressed and a force is applied by said actuator (50) to a return spring that moves the plunger (38),
wherein the movement of the plunger (38) moves the surface at the deformation region (40), thereby deforming the surface (12) to create the haptic effect.

9. The method of claim 8, further comprising generating illumination at the haptic enabled location when the haptic enabled location is pressed.

10. The method of claim 8, wherein the haptic effect indicates that a haptic enabled location press event has been recognized or that the haptic enabled location was pressed in error.

## Patentansprüche

1. System zum Vorsehen einer Rückmeldung auf eine Benutzereingabe, wobei das System einen haptikfähigen Ort auf einer zusammenhängenden Oberfläche (12) umfasst, der eine haptische Rückmeldung erzeugt, wobei die Oberfläche (12) umfasst:
einen ersten Bereich (62, 72) mit einem ersten Steifigkeitsniveau; und
einen zweiten Bereich (40, 64, 74) mit einem zweiten Steifigkeitsniveau, das geringer ist als das erste Steifigkeitsniveau;
wobei der zweite Bereich (40, 64, 74) einen Verformungsbereich (40) definiert und wobei ein Aktuator (50) die haptische Rückmeldung erzeugt, die im Allgemeinen innerhalb des Verformungsbereichs (40) lokalisiert ist;
wobei der Aktuator (50) einen Kolben (38) umfasst, der mit dem Verformungsbereich (40) in Kontakt steht, wenn keine Leistung an den Aktuator (50) angelegt wird;
wobei Leistung an den Aktuator (50) angelegt wird, wenn der haptikfähige Ort gedrückt wird, und eine Kraft durch den Aktuator (50) auf eine Rückstellfeder aufgebracht wird, die den Kolben (38) bewegt; und
wobei die Bewegung des Kolbens (38) die Oberfläche im Verformungsbreich (40) bewegt, wodurch die Oberfläche (12) verformt wird, um den haptischen Effekt zu erzeugen.

2. System nach Anspruch 1, wobei der Verformungsbereich (40) im Wesentlichen derselbe Bereich wie der zweite Bereich (40, 64, 74) ist oder wobei der Verformungsbereich (40) im Allgemeinen vom zweiten Bereich (74) umgeben ist.

3. System nach Anspruch 1, wobei der erste Bereich (62, 72) eine erste Dicke aufweist und der zweite Bereich (40, 64, 74) eine zweite Dicke aufweist, die dünner ist als die erste Dicke.

4. System nach Anspruch 3, wobei die zweite Dicke verjüngt ist.

5. System nach Anspruch 1, wobei die haptische Rückmeldung eine Vibration des Verformungsbereichs (40) umfasst.

6. System nach Anspruch 1, wobei der Aktuator (50) einen Kolben (38) umfasst, der mit einem Elektromagneten (32, 34) gekoppelt ist.

7. System nach Anspruch 1, wobei der Aktuator (50) ein intelligentes Material umfasst.

8. Verfahren zum Vorsehen einer Rückmeldung für einen haptikfähigen Ort auf einer zusammenhängenden Oberfläche (12) mit einer Vorderseite und einer Rückseite, wobei das Verfahren umfasst:
Definieren eines Verformungsbereichs (40) auf der Oberfläche (12) über einen Schnittbereich eines ersten Bereichs (62, 72) mit einem ersten Steifigkeitsniveau und eines zweiten Bereichs (40, 64, 74) mit einem zweiten Steifigkeitsniveau, das geringer ist als das erste Steifigkeitsniveau, wobei der zweite Bereich (40, 64, 74) den Verformungsbereich (40) definiert; und
Empfangen einer Angabe, dass der haptikfähige Ort gedrückt wird;
**gekennzeichnet durch**
Erzeugen eines haptischen Effekts im Verformungsbereich (40) über einen Aktuator (50), der mit der Rückseite der Oberfläche (12) in einem anderen Gebiet als dem Verformungsbereich (40) gekoppelt ist, wenn der haptikfähige Ort gedrückt wird;
wobei der Aktuator (50) einen Kolben (38) umfasst, der mit dem Verformungsbereich (40) an der Rückseite in Kontakt steht, wenn keine Leistung an den Aktuator (50) angelegt wird;
wobei Leistung an den Aktuator (50) angelegt wird, wenn der haptikfähige Ort gedrückt wird, und eine Kraft **durch** den Aktuator (50) auf eine Rückstellfeder aufgebracht wird, die den Kolben (38) bewegt,
wobei die Bewegung des Kolbens (38) die Oberfläche im Verformungsbereich (40) bewegt, wodurch die Oberfläche (12) verformt wird, um den haptischen Effekt zu erzeugen.

9. Verfahren nach Anspruch 8, das ferner das Erzeugen einer Beleuchtung am haptikfähigen Ort umfasst, wenn der haptikfähige Ort gedrückt wird.

10. Verfahren nach Anspruch 8, wobei der haptische Effekt angibt, dass ein Druckereignis des haptikfähigen Orts erkannt wurde oder dass der haptikfähige Ort irrtümlich gedrückt wurde.

## Revendications

1. Système, destiné à délivrer une rétroaction à une entrée utilisateur, ledit système comprenant un emplacement validé haptique sur une surface contiguë (12), qui génère une rétroaction haptique, ladite surface (12) comprenant :
une première région (62, 72) ayant un premier niveau de rigidité et
une seconde région (40, 64, 74), ayant un second niveau de rigidité, qui est inférieur audit premier niveau de rigidité ;
dans lequel ladite seconde région (40, 64, 74) définit une région de déformation (40) et dans lequel un actionneur (50) génère la rétroaction haptique qui est, généralement, localisée dans ladite région de déformation (40) ;
dans lequel l'actionneur (50) comprend un piston (38) qui se met en contact avec la région de déformation (40), lorsque la puissance n'est pas appliquée sur l'actionneur (50) ;
dans lequel la puissance est appliquée à l'actionneur (50), lorsqu'une pression est exercée sur l'emplacement validé haptique et qu'une force est appliquée par ledit actionneur (50) à un ressort de rappel, qui déplace le piston (38) et
dans lequel le déplacement du piston (38) déplace la surface sur la région de déformation (40), déformant, par ce moyen, la surface (12) pour créer l'effet haptique.

2. Système selon la revendication 1, dans lequel ladite région de déformation (40) est sensiblement la même région que ladite seconde région (40, 64, 74) ou dans lequel ladite région de déformation (40) est, généralement, entourée par ladite seconde région (74).

3. Système selon la revendication 1, dans lequel ladite première région (62, 72) a une première épaisseur et ladite seconde région (40, 64, 74) a une seconde épaisseur qui plus faible que ladite première épaisseur.

4. Système selon la revendication 3, dans lequel ladite seconde épaisseur est amincie.

5. Système selon la revendication 1, dans lequel la rétroaction haptique comprend une vibration de la région de déformation (40).

6. Système selon la revendication 1, dans lequel ledit actionneur (50) comprend un piston (38), couplé à un électro-aimant (32, 34).

7. Système selon la revendication 1, dans lequel ledit actionneur (50) comprend un matériau intelligent.

8. Procédé, consistant à délivrer une rétroaction pour un emplacement validé haptique sur une surface contiguë (12), ayant une face frontale et une face arrière, ledit procédé comprenant les étapes, consistant à :
définir une région de déformation (40) sur la surface (12) par l'intermédiaire d'une intersection d'une première région (62, 72), ayant un premier niveau de rigidité et une seconde région (40, 64, 74), ayant un second niveau de rigidité qui est inférieur audit premier niveau de rigidité, dans lequel ladite seconde région (40, 64, 74) définit la région de déformation (40) et
recevoir une indication, selon laquelle une pression est exercée sur l'emplacement validé haptique ;
**caractérisé en ce**
**qu'**il génère un effet haptique sur la région de déformation (40) par l'intermédiaire d'un actionneur (50), couplé à la face arrière de ladite surface (12), dans une zone autre que ladite région de déformation (40), lorsqu'une pression est exercée sur l'emplacement validé haptique ;
dans lequel l'actionneur (50) comprend un piston (38), qui se met en contact avec la région de déformation (40) sur la face arrière, lorsque la puissance n'est pas appliquée à l'actionneur (50) ;
dans lequel la puissance est appliquée à l'actionneur (50), lorsqu'une pression est exercée sur l'emplacement validé haptique et qu'une force est appliquée par ledit actionneur (50) à un ressort de rappel qui déplace le piston (38) ;
dans lequel le déplacement du piston (38) déplace la surface sur la région de déformation (40), déformant, par ce moyen, la surface (12), pour créer l'effet haptique.

9. Procédé selon la revendication 8, comprenant, en outre, l'étape, consistant à générer une illumination sur l'emplacement validé haptique, lorsqu'une pression est exercée sur l'emplacement validé haptique.

10. Procédé selon la revendication 8, dans lequel l'effet haptique indique qu'un événement de pression sur l'emplacement validé haptique a été reconnu ou qu'une pression a été exercée par erreur sur l'emplacement validé haptique.
